Europäisches Patentamt

European Patent Office

Office européen des brevets

(11) Veröffentlichungsnummer: **0 315 830 B1**

## (12) EUROPÄISCHE PATENTSCHRIFT

(45) Veröffentlichungstag der Patentschrift: **25.03.92**

(21) Anmeldenummer: **88117858.6**

(22) Anmeldetag: **26.10.88**

(51) Int. Cl.⁵: **H02J 9/06**

(54) **Netzteil für ein elektronisches Gerät mit Kondensatorpufferung.**

(30) Priorität: **10.11.87 DE 3738183**

(43) Veröffentlichungstag der Anmeldung:
**17.05.89 Patentblatt 89/20**

(45) Bekanntmachung des Hinweises auf die
Patenterteilung:
**25.03.92 Patentblatt 92/13**

(84) Benannte Vertragsstaaten:
**DE FR GB**

(56) Entgegenhaltungen:
**EP-A- 0 062 601**
**EP-A- 0 110 775**
**EP-A- 0 183 597**
**US-A- 4 220 872**

**ELECTRONIOUE INDUSTRIELLE, Band 70, Nr.
1, Januar 1964, Seiten 38-39, Paris, FR; "A
travers la presse mondiale: inverseur automatique secteur-batterie, à diode au silicium"**

(73) Patentinhaber: **SIEMENS AKTIENGESELL-
SCHAFT**
**Wittelsbacherplatz 2**
**W-8000 München 2(DE)**

(72) Erfinder: **Seibert, Rudolf, Dipl.-Ing.**
**Ammerseestrasse 15**
**W-8011 Kirchheim-Heimstetten(DE)**
Erfinder: **Cramer, Claus, Dipl.-Ing.**
**Geschwister-Scholl-Strasse 20**
**W-8500 Nürnberg(DE)**

# Beschreibung

Die Erfindung betrifft ein Netzteil für ein elektronisches Gerät mit Kondensatorpufferung zur Überbrückung eines kurzzeitigen Netzausfalls mit den Merkmalen des Oberbegriffs des Anspruchs 1.

Bei Netzteilen für elektronische Geräte wird häufig dafür gesorgt, daß bei einem kurzzeitigen Netzausfall nicht sofort die Spannungsversorgung für das elektronische Gerät zusammenbricht. Dies ist. z.B. bei elektronischen Uhren oder bei mit flüchtigen Speichern versehenen Geräten besonders wichtig, da diese bereits nach einem kurzzeitigen Ausfall der Versorgungsspannung ihren Informationsinhalt verlieren.

Eine gängige Methode zur Überbrückung kurzzeitiger Netzausfälle ist die Verwendung eines Pufferkondensators, der für kurze Zeit in der Lage ist, die Stromversorgung für das elektronische Gerät zu übernehmen. Eine Anordnung dieser Art ist aus der EP-A-0 183 597 bekannt. Dabei wird ein Pufferkondensator über einen Laderegler auf eine Spannung aufgeladen, die die Betriebsspannung des elektronischen Gerätes übersteigt. Darüber hinaus wird die Versorgungsspannung elektronisch überwacht. Wenn die Versorgungsspannung ausfällt oder unter einen bestimmten Wert sinkt, wird von der Überwachungsanordnung ein elektronischer Schalter betätigt, der den Pufferkondensator von der Versorgungsspannung abschaltet und über ein Reduzierglied mit dem Eingang des elektronischen Gerätes verbindet. Der Nachteil dieser Anordnung besteht vor allem darin, daß die Versorgungsspannung ständig auf bestimmte Grenzwerte überwacht werden und der Kondensator beim Unterschreiten des Grenzwertes mit Hilfe eines elektronischen Schalters von der Ladeeinrichtung auf den Eingang des elektronischen Gerätes umgeschaltet werden muß und bei Wiedererreichen des Sollwertes der Versorgungsspannung zurückgeschaltet werden muß.

Aus der EP-A-110 775 ist eine weitere Anordnung der vorbeschriebenen Art bekannt, bei der der Pufferkondensator ohne Regler unmittelbar mit der Versorgungsspannung verbunden ist. Bei einem kurzzeitigen Ausfall der Versorgungsspannung wird der Kondensator über einen elektronischen Schalter mit dem zu speisenden elektronischen Gerät verbunden. Dabei ist der Kondensator wegen des fehlenden Längsreglers für seine Ladespannung so zu bemessen, daß eine Überlastung auch bei der höchsten zu erwartenden Eingangsspannung nicht zu befürchten ist.

Der Erfindung liegt die Aufgabe zugrunde, ein Netzteil der eingangs beschriebenen Art so auszuführen, daß die am Kondensator anliegende Spannung begrenzt und wesentlich höher ist als die Betriebsspannung des zu speisenden elektronischen Gerätes, daß auf eine spezielle Überwachung der Versorgungsspannung ebenso verzichtet werden kann wie auf eine Umschaltung des Pufferkondensators bei zu niedriger oder ausgefallener Versorgungsspannung.

Diese Aufgabe wird durch die im Patentanspruch 1 gekennzeichnete Erfindung gelöst. Dadurch ist erreicht, daß der Kondensator wegen der Begrenzung der Ladespannung relativ klein gewählt werden kann und daß darüber hinaus auf eine spezielle Überwachung der Versorgungsspannung ebenso verzichtet werden kann, wie auf einen elektronischen Umschalter, der den Pufferkondensator von der Ladeposition in die Speiseposition umschaltet.

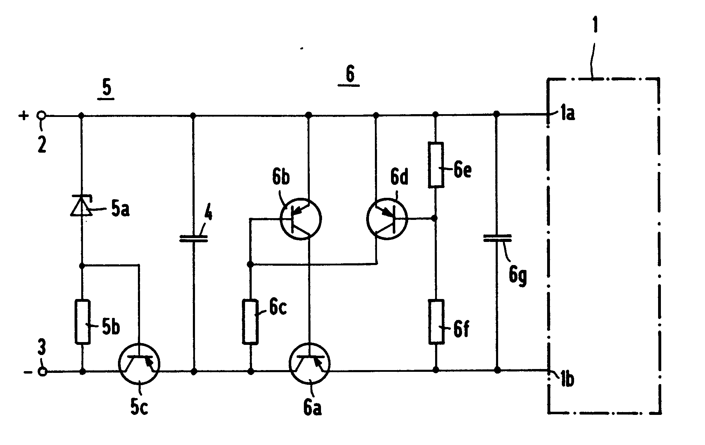

Ein Ausführungsbeispiel der Erfindung wird nachfolgend anhand der Figur näher erläutert.

Ein elektronisches Gerät 1 wird über Versorgungsspannungsklemmen 2, 3 aus einem Stromnetz mit Spannung versorgt. Zur Überbrückung kurzzeitiger Spannungsausfälle ist ein Pufferkondensator 4 vorgesehen. Dieser ist einerseits direkt an die Versorgungsspannungsklemme 2 und andererseits über die Kollektor-Emitter-Strecke eines Transistors 5c an die Versorgungsspannungsklemme 3 angeschlossen. Zwischen den beiden Versorgungsspannungsklemmen 2,3 ist die Reihenschaltung einer Z-Diode 5a und eines Widerstandes 5b vorgesehen. Der Verbindungspunkt dieser Elemente ist mit der Basis des Transistors 5 verbunden.

Der Transistor 5c zusammen mit dem Widerstand 5b und der Z-Diode 5a wirkt als Längsregler zur Begrenzung der Ladespannung des Pufferkondensators 4. Solange die Spannung am Pufferkondensator 4 nicht die Zener-Spannung der Z-Diode 5a vermindert um $U_{BE}$ (Basis-Emitterspannung des Transistors 5c) erreicht hat, erhält der Transistor 5c eine negative Basis-Emitter-Spannung und ist somit leitend. Erreicht dagegen die Spannung am Pufferkondensator 4 die Zenerspannung $U_Z$ der Z-Diode 5a, so läuft die Basis-Emitter-Spannung gegen 0 und der Transistor 5c sperrt.

Über den Längsregler 5 wird somit der Pufferkondensator 4 auf eine Spannung $U_C = U_Z - U_{BE}$ aufgeladen, die durch Dimensionierung der Z-Diode 5a so festgelegt ist, daß sie deutlich über der Betriebsspannung des elektronischen Gerätes 1 liegt.

Die am Pufferkondensator 4 anstehende Spannung wird nun durch die Spannungstabilisierschaltung 6 auf einen für das elektronische Gerät 1 geeigneten Wert herabgesetzt. Die Spannungsstabilisierschaltung 6 ist an sich als Stabilisierungsschaltung für Batteriespannungen aus dem Buch ITT "Schaltbeispiele mit diskreten Halbleiter-Bauelementen", Ausgabe 76/1, Seite 46,47 bekannt.

Die Spannung am elektronischen Gerät 1 wird über den Transistor 6a geregelt, dessen Kollektor-Emitter-Strecke zwischen einem Anschluß des Kondensators 4 und einer Anschlußklemme 1b des elektronischen Gerätes 1 eingefügt ist. Der zweite Anschluß des Pufferkondensators 4 ist direkt mit einer Anschlußklemme 1a des elektronischen Gerätes 1 verbunden. Die Basis des Transistors 6a wird über den Transistor 6b, dessen Emitter mit der Versorgungsspannungsklemme 2 und dessen Kollektor mit der Basis des Transistors 6a verbunden ist, mit Basisstrom beaufschlagt. Der Transistor 6b erhält wiederum seinen Basisstrom über einen Widerstand 6c, der zwischen Basis des Transistors 6b und Kollektor des Transistors 6a angeordnet ist.

Zwischen den beiden Anschlußklemmen 1a und 1b ist ein Spannungsteiler mit den Widerständen 6e und 6f angeordnet, deren Verbindungspunkt mit der Basis eines Transistors 6d verbunden ist. Der Emitter des Transistors 6d ist mit der Versorgungsspannungsklemme 2, der Kollektor mit dem Verbindungspunkt von Widerstand 6c und Basis des Transistors 6e verbunden.

Wenn die Versorgungsspannung an den Anschlußklemmen 1a,1b ansteigt, wird der Transistor 6d in zunehmendem Maße leitend. Damit wird ein größerer Anteil des über den Widerstand 6c fließenden Stroms über den Transistor 6d und damit von der Basis des Transistors 6b abgeleitet. Dies hat zur Folge, daß der Längstransistor 6a weniger Basisstrom erhält und somit seinen Widerstand erhöht. Damit wird der Anstieg der Versorgungsspannung an den Anschlußklemmen 1a,1b ausgeregelt.

Die an den Anschlußklemmen 1a,1b anstehende Versorgungsspannung ist im wesentlichen durch das Spannungsteilerverhältnis der Widerstände 6e,6f und durch die Basis-Emitter-Spannung des Transistors 6d festgelegt.

Der parallel zu den Anschlußklemmen 1a,1b liegende Kondensator 6g dient zur Glättung der Versorgungsspannung.

Mit dieser Schaltung bleibt die Versorgungsspannung an den Anschlußklemmen 1a,1b des elektronischen Gerätes 1 auch dann weitgehend konstant, wenn die Spannung am Pufferkondensator 4 aufgrund dessen Entladung absinkt. Dies gilt im wesentlichen solange die Spannung am Pufferkondensator 4 um die Kollektor-Emitter-Spannung des voll durchgesteuerten Längstransistors 6a über der Betriebsspannung des elektronischen Gerätes liegt. Bei dieser Schaltung kann der Pufferkondensator 4 auf eine deutlich über der Betriebsspannung des elektronischen Gerätes 1 liegende Spannung aufgeladen werden und speichert damit eine relativ hohe Energie zur Überbrückung eines Netzspannungsausfalls. Die Zeit, bis zu der der Pufferkondensator 4 auf die minimale Betriebsspannung des elektronischen Gerätes 1 entladen ist, kann somit gegenüber herkömmlichen Schaltungen bei gleichbleibender Kapazität des Pufferkondensators 4 erhöht werden.

## Patentansprüche

1. Netzteil für ein elektronisches Gerät (1) mit Kondensatorpufferung zur Überbrückung eines kurzzeitigen Netzausfalls, wobei in die Verbindung zwischen den Versorgungsspannungsklemmen (2, 3) und den Anschlußklemmen (1a, 1b) für die Spannungsversorgung des elektronischen Gerätes (1) ein Pufferkondensator (4) eingefügt ist, der über eine Spannungsstabilisierungsschaltung (6) an die Anschlußklemmen (1a, 1b) des elektronischen Gerätes (1) angeschlossen ist, und die von der Spannungsstabilisierungsschaltung (6) konstant gehaltene Betriebsspannung des elektronischen Gerätes (1) wesentlich niedriger gewählt ist als die Spannung am Pufferkondensator (4), **dadurch gekennzeichnet,** daß der Pufferkondensator (4) einerseits direkt an den Eingang der Spannungsstabilisierungsschaltung (6) und andererseits über einen seine Ladespannung begrenzenden Längsregler (5) an die Versorgungsspannungsklemmen (2, 3) angeschlossen ist und der Längsregler aus der an den Versorgungsspannungsklemmen (2, 3) angeschlossenen Reihenschaltung einer Zener-Diode (5a) und eines Widerstandes (5b) und einem ersten Transistor (5c) besteht, dessen Basis an den Verbindungspunkt der Zener-Diode (5a) und dem Widerstand (5b) angeschlossen ist und der Pufferkondensator (4) mit einer Klemme (2) der Versorgungsspannung direkt und über die Kollektor-Emitter-Streckedes ersten Transistors (5c) mit der anderen Klemme (3) der Versorgungsspannung verbunden ist, wobei die Zenerdiode so dimensioniert ist, daß der Pufferkondensator (6) auf eine Spannung aufgeladen wird, die deutlich über der Betriebsspannung des elektronischen Gerätes liegt.

2. Netzteil nach Anspruch 1, **dadurch gekennzeichnet,** daß die Spannungsstabilisierschaltung (6) einen zweiten Transistor (6a) enthält, dessen Emitter-Kollektor-Strecke zwischen Pufferkondensator (4) und einer Anschlußklemme (1b) des elektronischen Gerätes (1) angeordnet ist, daß der zweite Transistor (6a) von einem dritten Transistor (6b) mit Basisstrom versorgt wird, welcher seinerseits über einen Widerstand (6c) mit Basisstrom versorgt wird, daß ein vierter Transistor (6d) vorgesehen ist, dessen Basis über einen Spannungsteiler (6e, 6f) an die Anschlußklemmen (1a, 1b) des elektronischen Gerätes (1) angeschlossen ist und der mit zunehmender Spannung an den Anschlußklemmen (1a, 1b) mehr Strom des Widerstandes (6c) von der Basis des dritten Transistors (6b) ableitet.

## Claims

1. Power supply unit for an electronic device (1) having capacitor buffering for the bridging of a temporary power failure, wherein a buffer capacitor (4) is inserted into the connection between the supply voltage terminals (2, 3) and the connection terminals (1a, 1b) for the voltage supply of the electronic device (1), which buffer capacitor (4) is attached by means of a voltage stabilization circuit (6) to the connection terminals (1a, 1b) of the electronic device (1), and the operational voltage of the electronic device (1), held constant by the voltage stabilization circuit (6), is chosen to be substantially lower than the voltage at the buffer capacitor (4), characterized in that the buffer capacitor (4) is attached on the one hand directly to the input of the voltage stabilization circuit (6) and on the other hand by means of a longitudinal regulator (5), limiting its charge voltage, to the supply voltage terminals (2, 3) and the longitudinal regulator comprises the series connection of a Zener diode (5a), attached to the supply voltage terminals (2, 3), and a resistance (5b) and a first transistor (5c), the base of which is attached to the connection point of the Zener diode (5a) and the resistance (5b) and the buffer capacitor (4) is directly connected to a terminal (2) of the supply voltage and by means of the collector-emitter path of the first transistor (5c) is connected to the other terminal (3) of the supply voltage, whereby the Zener diode is dimensioned in such a way that the buffer capacitor (6) is charged to a voltage which lies clearly above the operational voltage of the electronic device.

2. Power supply unit according to claim 1, characterized in that the voltage stabilization circuit (6) contains a second transistor (6a), whose emitter-collector path is arranged between buffer capacitor (4) and a connection terminal (1b) of the electronic device (1), in that the second transistor (6a) is supplied by a third transistor (6b) with base current, which for its part is supplied with base current via a resistance (6c), in that a fourth transistor (6d) is provided, whose base is attached by means of a voltage divider (6e, 6f) to the connection terminals (1a, 1b) of the electronic device (1) and which with increasing voltage to the connection terminals (1a, 1b) diverts more current of the resistance (6c) from the base of the third transistor (6b).

## Revendications

1. Bloc d'alimentation secteur pour un appareil électronique (1) comportant un tamponnage par condensateur de manière à maintenir le fonctionnement pendant une défaillance de brève durée du secteur, et dans lequel, dans la liaison entre les bornes (2,3) d'application de la tension d'alimentation et les bornes de raccordement (1a,1b) pour la tension d'alimentation de l'appareil électronique (1), est inséré un condensateur tampon (4), qui est raccordé, par l'intermédiaire d'un circuit de stabilisation de tension (6), aux bornes de raccordement (1a,1b) de l'appareil électronique (1), la tension de service de l'appareil électronique (1), qui est maintenue constante par le circuit de stabilisation de tension (6), étant choisie nettement inférieure à la tension aux bornes du condensateur tampon (4), caractérisé par le fait que le condensateur tampon est raccordé, d'une part, directement à l'entrée du circuit de stabilisation de tension (6), et, d'autre part, par l'intermédiaire d'un régulateur longitudinal (5) qui limite la tension de charge du condensateur, aux bornes (2,3) d'application de la tension d'alimentation, et le régulateur longitudinal est constitué par un circuit série qui est raccordé aux bornes (2,3) d'application de la tension d'alimentation et est constitué par une diode Zener (5a) et une résistance (5b) et un premier transistor (5c), dont la base est raccordée au point de jonction de la diode Zener (5a) et de la résistance (5b), et le condensateur tampon (4) est raccordé directement à une borne (2) d'application de la tension d'alimentation et, par l'intermédiaire de la voie collecteur-émetteur du premier transistor (5c), à l'autre borne (3) d'application de la tension d'alimentation, la diode Zener étant dimensionnée en sorte que le condensateur tampon (6) est chargé à une tension nettement supérieure à la tension de service de l'appareil électronique.

2. Bloc d'alimentation secteur suivant la revendication 1, caractérisé par le fait que le circuit de stabilisation de tension (6) contient un second transistor (6a), dont la voie émetteur-collecteur est disposée entre le condensateur tampon (4) et une borne de raccordement (1b) de l'appareil électronique (1), que le second transistor (6a) est alimenté avec un courant de base par un troisième transistor (6b), qui, pour sa part, est alimenté avec un courant de base par l'intermédiaire d'une résistance (6c), qu'il est prévu un quatrième transistor (6d), dont la base est raccordée par l'intermédiaire d'un diviseur de tension (6e,6f) aux bornes de raccordement (1a,1b) de l'appareil électronique (1) et qui, lorsque la tension augmente au niveau des bornes de raccordement (1a,1b), dérive une quantité plus importante de courant de la résistance (6c) à partir de la base du troisième transistor (6b).